# EUROPEAN PATENT APPLICATION

(11) **EP 4 848 797 A1**
(43) Date of publication of application: **02.12.2026**
(21) Application number: 25732874.0
(22) Date of filing: 23.01.2025
(51) Int. Cl.: H04W 24/10, H04W 24/08, H04W 64/00, H04W 72/232, H04W 52/02, H04L 5/00, H04B 7/06, G06N 20/00

(54) **METHOD AND DEVICE FOR REPORTING**

(30) Priority: 24.01.2024 US 202463624302 P
(71) Applicant: LG Electronics Inc., Seoul 07336 (KR)
(72) Inventor: GO, Seongwon, Seoul 06772 (KR); KANG, Jiwon, Seoul 06772 (KR); PARK, Haewook, Seoul 06772 (KR); HWANG, Seunggye, Seoul 06772 (KR); YANG, Suckchel, Seoul 06772 (KR); KIM, Seonwook, Seoul 06772 (KR)
(74) Representative: Mooser, Sebastian Thomas
(86) International application number: PCT/KR2025/001346
(87) International publication number: WO 2025/159541

(57) **Abstract**

A method according to an embodiment of the disclosure includes: receiving configuration information from a base station and reporting information related to at least one downlink reference signal (DL RS) to the base station. The configuration information includes configurations related to measurement and/or reporting. One or more configurations among the configurations are released or deactivated based on the at least one DL RS.

## Description

### [TECHNICAL FIELD]

The disclosure relates to a method for reporting and an apparatus thereof.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

According to Rel-19 NES(Network Energy Saving) WI, there is a possibility of standardization for operations, such as when a base station transmits a light synch signal or long-period SSB, a UE transmits a WUS signal, and then, the base station transmits a normal SSB. Meanwhile, in Rel-19 AI/ML BM, standardization is in progress for a UE-side AI/ML operation in which the UE measures only a beam set corresponding to Set B and predicts and reports a predicted Top-K beam of Set A. Depending on a UE-side model, it is necessary to specify a reporting method for which Set A/B combination (e.g., a combination of DL RSs) the UE prefers.

### [TECHNICAL PROBLEM]

An object of the disclosure is to propose a method for reporting preferred/non-preferred DL RS(s) and performing operations based thereon in terms of network energy saving (NES).

Another object of the disclosure is to propose a method for reporting preferred/non-preferred DL RS(s) and performing operations based thereon in terms of AI/ML.

The technical objects to be achieved by the disclosure are not limited to those that have been described hereinabove merely by way of example, and other technical objects that are not mentioned may be clearly understood by those skilled in the art, to which the disclosure pertains, from the following descriptions.

### [TECHNICAL SOLUTION]

A method according to an embodiment of the disclosure includes: receiving configuration information from a base station and reporting information related to at least one downlink reference signal (DL RS) to the base station.

The configuration information includes configurations related to measurement and/or reporting. One or more configurations among the configurations are released or deactivated based on the at least one DL RS.

The at least one DL RS may include a non-preferred DL RS.

The one or more configurations may include a configuration based on the non-preferred DL RS.

Sets related to beam prediction may be determined based on a DL RS other than the non-preferred DL RS.

Positioning measurement reporting may be performed based on a positioning reference signal (PRS) related to a DL RS other than the non-preferred DL RS.

The at least one DL RS may include a preferred DL RS.

The one or more configurations may include remaining configurations excluding a configuration based on the preferred DL RS among the configurations.

The information may be related to a request for a reduction of transmit power of the preferred DL RS.

Information related to a model may be configured based on the preferred DL RS.

The information may include i) a plurality of DL RSs and ii) a coefficient for each DL RS among the plurality of DL RSs. The information related to the model may be related to a DL RS based on a linear combination of each DL RS among the plurality of DL RSs and the coefficient.

Based on the information related to the model, data collection for the model and/or performance monitoring of the model may be performed.

Based on the preferred DL RS, sets related to beam prediction may be determined.

Positioning measurement reporting may be performed based on a PRS related to the preferred DL RS.

The at least one DL RS may be based on at least one synchronization signal block (SSB).

The one or more configurations may include one or more sub-configurations related to one reporting configuration.

Based on the information, sets related to the at least one DL RS among sets configured for a model may be indicated.

The sets related to the at least one DL RS may be determined from among sets indicated based on group common downlink control information (DCI) among the configured sets.

The configured sets may include i) sets common to characteristics and/or ii) sets specific to each of the characteristics.

A user equipment according to another embodiment of the disclosure includes: one or more transceivers; one or more processors; and one or more memories connected to the one or more processors and storing instructions.

The instructions may allow the user equipment to perform all steps of a method of any one method among the above methods, based on being executed by the one or more processors.

A device according to another embodiment of the disclosure includes: one or more memories; and one or more processors operably connected to the one or more memories. The one or more memories store instructions that allow the device to perform all steps of any one method among the above methods, based on being executed by the one or more processors.

A non-transitory computer readable medium according to another embodiment of the disclosure stores instructions. The instructions executable by one or more processors allow a user equipment to perform all steps of any one method among the above methods.

A method according to another embodiment of the disclosure includes a step of transmitting configuration information to a user equipment and a step of receiving information related to at least one downlink reference signal (DL RS) from the user equipment.

The configuration information includes configurations related to measurement and/or reporting. One or more of the configurations are released or deactivated based on the at least one DL RS.

A base station according to another embodiment of the disclosure includes one or more transceivers; one or more processors; and one or more memories connected to the one or more processors and storing instructions.

The instructions allow the base station to perform all steps of the above method, based on being executed by the one or more processors.

### [ADVANTAGEOUS EFFECTS]

According to an embodiment of the disclosure, since one or more configurations are released/deactivated based on a reported DL RS, power consumption may be reduced compared to the existing method. Specifically, power consumption of a base station/NW may be reduced by the power required to transmit a signal related to the reported DL RS. In addition, power consumption of a UE may be reduced by the power required to perform measurement/reporting on a configuration related to the reported DL RS.

According to an embodiment of the disclosure, sets related to beam prediction may be determined based on the reported DL RS. When the base station and the UE each use the same AI/ML model (e.g., the same model ID or the same model functionality), the base station and the UE may utilize the same sets (e.g., Set A, Set B) to produce the same result. Since there is no need to share the results of the model of the UE or base station with the base station or UE through additional signaling, signaling overhead and delay are reduced when performing a subsequent operation (e.g., UL/DL transmission) after performing a model-based operation (e.g., beam prediction).

According to an embodiment of the disclosure, positioning measurement reporting may be performed based on the reported DL RS. Accordingly, the DL PRS for which the UE performs positioning measurement reporting may be recognized in advance by the base station/NW. Since the payload size of the report may be predicted in advance, the base station may allocate only the resources necessary for the corresponding report to the UE without waste. In addition, only the PRS necessary for the UE to perform positioning measurement reporting may be configured/transmitted based on the reported DL RS. Since unnecessary PRS configuration/transmission is not performed, a power saving effect in terms of NES may be obtained.

Effects that could be achieved with the disclosure are not limited to those that have been described hereinabove merely by way of example, and other effects and advantages of the disclosure will be more clearly understood from the following description by a person skilled in the art to which the disclosure pertains.

### [BRIEF OF DESCRIPTION OF THE DRAWINGS]

FIG. 1 is a flowchart illustrating an example of a CSI-related procedure.
FIG. 2 is a flowchart illustrating an example of a DL BM procedure.
FIG. 3 is a flowchart illustrating a method according to an embodiment of the disclosure.
FIG. 4 is a flowchart illustrating a method according to another embodiment of the disclosure.
FIG. 5 is a diagram illustrating the configuration of a first device and a second device according to an embodiment of the disclosure..

### [DETAILED DESCRIPTION]

Hereinafter, preferred embodiments according to the disclosure will be described in detail with reference to the accompanying drawings. The detailed description set forth below, together with the accompanying drawings, is intended to describe exemplary embodiments of the disclosure and is not intended to represent the only embodiments in which the disclosure may be practiced. The detailed description below includes specific details to provide a complete understanding of the disclosure.

In some cases, well-known structures and devices may be omitted or illustrated in block diagram form focusing on the core functions of each structure and device in order to avoid ambiguity in the concepts of the disclosure.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### < Beam Management (BM) >

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.
- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS).

Further, each BM procedure may include Tx beam sweeping for determining the Tx beam and Rx beam sweeping for determining the Rx beam.

### DL BM

The DL BM procedure may include (1) transmission of beamformed DL reference signals (RSs) (e.g., CIS-RS or SS Block (SSB)) of the eNB and (2) beam reporting of the UE.

Here, the beam reporting includes a preferred DL RS identifier (ID)(s) and L1-Reference Signal Received Power (RSRP) corresponding to the preferred DL RS identifier (ID)(s).

The DL RS ID may be an SSB Resource Indicator (SSBRI) or a CSI-RS Resource Indicator (CRI).

An example of beamforming using an SSB and CSI-RS is described in detail below.

An SSB beam and a CSI-RS beam may be used for the beam management. A measurement metric is an L1-RSRP for each resource/block. The SSB may be used for coarse beam management and the CSI-RS may be used for fine beam management. The SSB may be used for both the Tx beam sweeping and the Rx beam sweeping.

The Rx beam sweeping using the SSB may be performed while the UE changes the Rx beam for the same SSBRI across multiple SSB bursts. Here, one SS burst includes one or more SSBs and one SS burst set includes one or more SSB bursts.

Hereinafter, the DL BM procedure is described.

A configuration for beam report using the SSB is performed during a CSI/beam configuration in an RRC connected state (or RRC connected mode).
- The UE receives configuration information from the base station. As a specific example, the UE receives CSI-ResourceConfig IE including CSI-SSB-ResourceSetList including SSB resources used for BM from the base station.

Table 1 shows an example of CSI-ResourceConfig IE. As shown in Table 1, a BM configuration using the SSB is not separately defined and the SSB is configured like the CSI-RS resource.

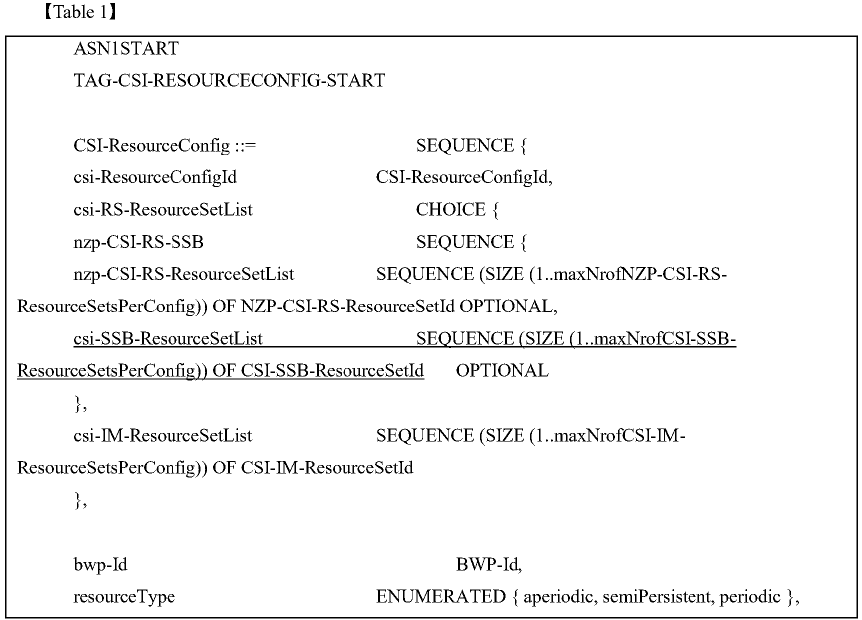

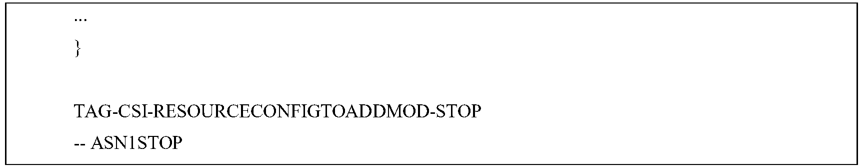

In Table 1, csi-SSB-ResourceSetList parameter represents a list of SSB resources used for beam management and reporting in one resource set. Here, SSB resource set may be configured as {SSBx1, SSBx2, SSBx3, SSBx4, ...}. For example, SSB index may be defined as 0 to 63.
- The UE receives a downlink reference signal (DL RS) from the base station. For example, the UE receives an SSB from the base station based on the CSI-SSB-ResourceSetList.
- The UE transmits a beam report to the base station. For example, when CSI-ReportConfig related to reporting on SSBRI (SSB Resource Indicator) and L1-RSRP is set, the UE reports the best SSBRI and the corresponding L1-RSRP to the base station.

That is, when reportQuantity of the CSI-RS reportConfig IE is configured as 'ssb-Index-RSRP', the terminal reports best SSBRI and corresponding L1-RSRP to the base station.

Further, when a CSI-RS resource is configured and 'QCL-TypeD' may be applied in OFDM symbol(s) the same as the SSB (SS/PBCH Block), the terminal may assume the CSI-RS and SSB as being quasi co-located in terms of the 'QCL-TypeD'.

In this case, the QCL TypeD may mean there is QCL between antenna ports in terms of the spatial Rx parameter. When the terminal receives a plurality of DL antenna ports that are in the QCL Type D relationship, the same reception beam may be applied. Further, the terminal does not expect that CSI-RS is configured in an RE overlapping the RE of the SSB.

### < CSI-related operation >

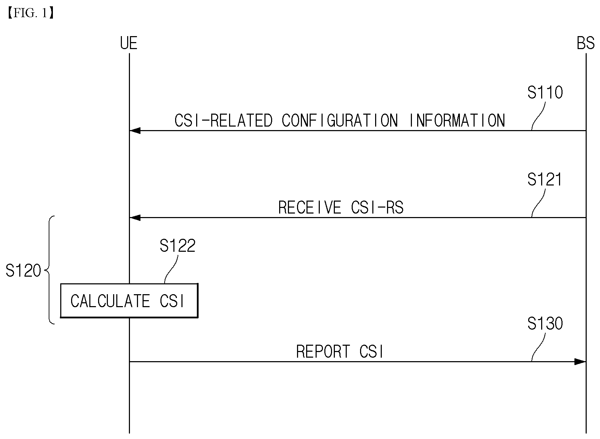

FIG. 1 is a flowchart illustrating an example of a CSI-related procedure.

Referring to FIG. 1, in order to perform one of the purposes of CSI-RS, a terminal (e.g., user equipment (UE)) receives configuration information related to CSI from a base station (e.g., general Node B (Gnb)) via RRC (radio resource control) signaling (S110).

The configuration information related to CSI may include at least one of CSI-IM (interference management) resource-related information, CSI measurement configuration-related information, CSI resource configuration-related information, CSI-RS resource-related information, or CSI report configuration-related information.

The CSI resource configuration-related information may be expressed as a CSI-ResourceConfig IE. The CSI resource configuration-related information defines a group including at least one of a NZP (non-zero power) CSI-RS resource set, a CSI-IM resource set, or a CSI-SSB resource set. That is, the CSI resource configuration-related information includes a CSI-RS resource set list, and the CSI-RS resource set list may include at least one of a NZP CSI-RS resource set list, a CSI-IM resource set list, or a CSI-SSB resource set list. The CSI-RS resource set is identified by a CSI-RS resource set ID, and one resource set includes at least one CSI-RS resource. Each CSI-RS resource is identified by a CSI-RS resource ID.

The CSI report configuration-related information includes a reportConfigType parameter indicating a time domain behavior and a reportQuantity parameter indicating a CSI-related quantity to be reported. The time domain behavior may be periodic, aperiodic, or semi-persistent.

The reportQuantity parameter may be related to at least one of a channel quality indicator (CQI), a precoding matrix indicator (PMI), a CSI-RS resource indicator (CRI), an SSB resource block Indicator (SSBRI), a layer indicator (LI), a rank indicator (RI), and a layer 1-reference signal received strength (RSRP).

The measurement resource may include a configuration for a downlink signal and/or a downlink resource on which the UE performs measurement to determine feedback information. The measurement resource may be configured as a ZP and/or NZP CSI-RS resource set associated with a CSI reporting configuration. The NZP CSI-RS resource set may include a CSI-RS set or an SSB set. For example, L1-RSRP may be measured for the CSI-RS set or may be measured for the SSB set.

The UE measures a CSI based on configuration information related to the CSI (S120). The CSI measurement may include (1) a process of receiving a CSI-RS of the UE (S121) and (2) a process of computing the CSI using the received CSI-RS (S122). The UE reports the CSI to the base station (S130).

### Resource setting

Each CSI resource setting 'CSI-ResourceConfig' includes configuration for S≥1 CSI resource set (given by higher layer parameter csi-RS-ResourceSetList). The CSI resource setting corresponds to CSI-RS- resourcesetlist. In this case, S is the number of configured CSI-RS resource sets. Here, the list of S≥1 CSI resource sets includes either or both of the NZP CSI-RS resource set (s) and the SS/PBCH block (SSB) set (s) used for L1-RSRP computation, or includes the CSI-IM resource set(s).

Next, one or more CSI resource settings for channel measurement (CM) and interference measurement (IM) are configured through higher layer signaling.
- CSI-IM resource for interference measurement.
- NZP CSI-RS resource for interference measurement.
- NZP CSI-RS resource for channel measurement.

That is, a CMR (channel measurement resource) may be an NZP CSI-RS for CSI acquisition and an IMR (Interference measurement resource) may be an NZP CSI-RS for CSI-IM and IM.

In this case, the CSI-IM (or ZP CSI-RS for IM) is generally used for inter-cell interference measurement.

Further, the NZP CSI-RS for IM is generally used for intra-cell interference measurement from multi-users.

The UE may assume that a CSI-RS resource(s) for channel measurement and a CSI-IM/NZP CSI-RS resource(s) for interference measurement configured for one CSI reporting are 'QCL-TypeD' for each resource.

As described above, resource setting may mean a resource set list.

For an aperiodic CSI, each trigger state configured using higher layer parameter CSI-AperiodicTriggerState is associated with one or several CSI-ReportConfigs in which each CSI-ReportConfig is linked to periodic, semi-persistent, or aperiodic resource setting.

One reporting setting may be connected to maximally three resource settings.

### < Description of Rel-17/18 beam management >

In Rel-17, not only a DL TCI state but also UL TCI state may be indicated through the DL DCI (e.g., DCI format 1-1 or 1-2), or only the UL TCI state may be indicated without DL TCI state indication. As a result, the methods used for UL beam and power control (PC) configuration in the existing R15/R16 are replaced with the UL TCI state indication method in Rel-17. More specifically, in R17, one UL TCI state may be indicated through a TCI field of DL DCI, and the corresponding UL TCI state may be applied to all PUSCHs and all PUCCHs after a certain time called beam application time and may be applied to some or all of the indicated SRS resource sets. In addition, the base station may perform UE common beam update to perform indication/update for a plurality of specific DL/UL channel/RS combinations of UEs commonly with one beam (using a joint or separate TCI state) by utilizing the DCI and/or MAC-CE. The target channels/RS of common beam update include UE-dedicated CORESET and UE-dedicated reception on the PDSCH for DL, DG/CG-PUSCH and all or subset of dedicated PUCCH for UL, and in addition, an AP CSI-RS for tracking/BM and SRS may be configured as target channels/RS. In Rel-18, considering the M-TRP environment, the method of indicating a plurality of UL TCI states (and/or DL TCI states) through the TCI field of DL DCI is standardized, and the uplink/downlink resources to which a plurality of indicated TCIs are to be applied may be defined/configured according to a S-DCI based M-TRP environment and an M-DCI based M-TRP environment.

### < AIML related description >

With the advancement of AI/ML (Artificial intelligence/machine learning) technology, the node(s) and UE(s) constituting a wireless communication network have become more intelligent/advanced.

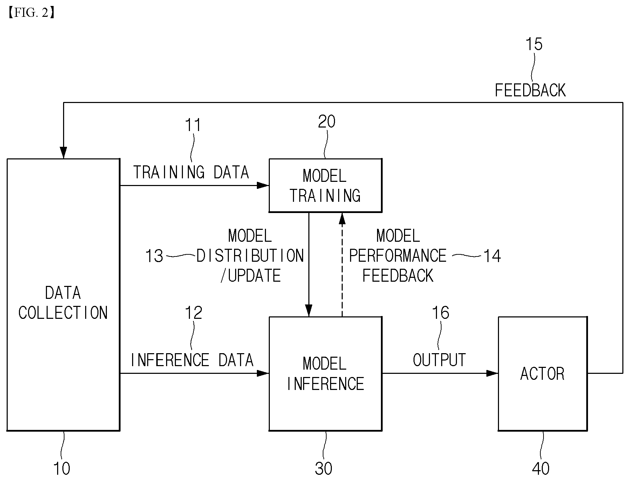

Hereinafter, a functional framework for AI operation is described with reference to FIG. 2.

FIG. 2 illustrates a functional framework of an AI/ML model.

Hereinafter, terms may be defined as follows for a more specific description of AI (or AI/ML).
- Data collection: Data collected from network nodes, management entities, or UEs as a basis for AI model training, data analysis, and inference.
- AI model: Data driven algorithm adopting AI technology to generate a set of outputs including prediction information and/or decision parameters based on a set of inputs.
- AI/ML training: An online or offline process that trains an AI model by learning functions and patterns that best represent data and obtain an AI/ML model trained for inference.
- AI/ML inference: A process that predicts or induces decisions based on data and an AI model collected using a trained AI model.

Referring to FIG. 2, a data collection function 10 is a function that collects input data and provides processed input data to a model training function 20 and a model inference function 30.

Examples of input data may include measurements from UEs or other network entities, feedback from actors, and outputs of AI models.

The data collection function 10 performs data preparation based on the input data and provides input data processed through the data preparation. Here, the data collection function 10 does not perform data preparation (e.g., data pre-processing and cleaning, forming, and transformation) specific to each AI algorithm and may perform data preparation common to AI algorithms.

After the data preparation process is performed, the data collection function 10 provides training data 11 to the model training function 20 and provides inference data 12 to the model inference function 30. Here, the training data 11 is data required as input for the AI model training function 20. The inference data 12 is data required as input for the AI model inference function 30.

The data collection function 10 may be performed by a single entity (e.g., UE, RAN node, network node, etc.) or may be performed by a plurality of entities. In this case, the training data 11 and the inference data 12 may be provided to the model training function 20 and the model inference function 30 respectively from the plurality of entities.

The model training function 20 is a function that performs AI model training, validation, and testing that may generate model performance metrics as part of an AI model testing procedure. The model training function 20 is also responsible for data preparation (e.g., data pre-processing and cleaning, forming, and transformation) based on the training data 11 provided by the data collection function 10, if necessary.

Here, a model deployment/update 13 is used to initially deploy a trained, verified, and tested AI model to the model inference function 30 or to provide an updated model to the model inference function 30.

The model inference function 30 is a function that provides an AI model inference output 16 (e.g., prediction or decision). The model inference function 30 may provide a model performance feedback 14 to the model training function 20 if applicable. In addition, the model inference function 30 is also responsible for data preparation (e.g., data pre-processing and cleaning, forming, and transformation) based on the inference data 12 provided by the data collection function 10 if necessary.

Here, the output 16 refers to an inference output of an AI model generated by the model inference function 30, and the details of the inference output may vary depending on a use case.

The model performance feedback 14 may be used to monitor the performance of the AI model if available, and the feedback may be omitted.

An actor function 40 is a function that receives the output 16 from the model inference function 30 and triggers or performs a corresponding task/action. The actor function 40 may trigger tasks/actions for other entities (e.g., one or more UEs, one or more RAN nodes, one or more network nodes, etc.) or for itself.

A feedback 15 may be used to derive the training data 11 or the inference data 12 or to monitor the performance of the AI model, an impact on the network, etc.

Meanwhile, the definitions of training/validation/test in a data set used in AI/ML may be distinguished as follows.
- Training data: It refers to a data set for learning a model.
- Validation data: It refers to a data set for validating a model whose learning has already been completed. In other words, it refers to a data set usually used to prevent overfitting of a training data set.

Validation data also refers to a data set for selecting the best among various models learned during the learning process. Therefore, it may be considered to be a type of learning.
- Test data: It refers to a data set for final evaluation. This data is unrelated to learning.

In the case of the data set, if a training set is generally divided, training data and validation data may be divided and used in a ratio of 8:2 or 7:3 within the entire training set, and if the test is included, they may be divided and used in a ratio of 6:2:2 (training: validation: test).

The functions illustrated in FIG. 2 above may be implemented in RAN nodes (e.g., base stations, TRPs, central units (CUs) of base stations, etc.), network nodes, OAM (operation administration maintenance) of network operators, or UEs.

In this document, '/' means 'and', 'or', or 'and/or' depending on the context.

In the disclosure, 'beam' may mean a source RS for a 'spatial filter' or a 'spatial relation', and may be interpreted as a QCL (type-D) RS or a TCI state or (in case of uplink) a spatial relation RS.

As an example, in the disclosure, 'beam' may mean a spatial filter determined based on the reference RS or the source RS. The spatial filter may include a spatial domain filter, a spatial domain transmission filter, and a spatial domain receive filter. For example, in this specification, 'beam' may be interpreted as/replaced with a reference signal index (RS index), a reference signal resource index (RS resource index), and/or a resource indicator (e.g., RS index, SSB index, CSI-RS resource index, SRS resource index, SSB Resource Indicator (SSBRI), CSI-RS Resource Indicator (CRI), etc.).

As an example, a beam related to UL may be referred to as i) a spatial filter (for uplink transmission or uplink reception), ii) a spatial domain filter (for uplink transmission or uplink reception), iii) an uplink spatial domain transmission filter, iv) an uplink spatial domain receive filter, v) an uplink transmission spatial filter (UL Tx spatial filter) or vi) an uplink receive spatial filter (UL Rx spatial filter).

As an example, a beam related to DL may be referred to as i) a spatial filter (for downlink transmission or downlink reception), ii) a spatial domain filter (for downlink transmission or downlink reception), iii) a downlink spatial domain transmission filter, iv) a downlink spatial domain receive filter, v) a downlink transmission spatial filter (DL Tx spatial filter) or vi) a downlink receive spatial filter (DL Rx spatial filter).

In the NR standard, QCL configuration and spatialRelation configuration by TCI state configuration are utilized for UL/DL transmission beam/reception beam configuration of a UE. In the Rel-15 NR standard, RRC and MAC CE signaling are mainly utilized for uplink/downlink reception/transmission beam. Dynamic signaling has been allowed only for the reception beam of PDSCH by utilizing the TCI state field of DL grant DCI. A unified TCI framework was introduced through the Rel-17/18 NR standard. Specifically, a method of dynamically managing a common beam by indicating AN indicated TCI using DCI for reception beam/transmission beam was introduced. In the standardization after Rel-19, there is a possibility that discussions will take place in terms of network energy saving (NES) or AI/ML, such as base stations requesting ON/OFF of specific DL RS(s) or requesting the configuration of specific DL RS(s) to collect training data or input data of AI/ML models on the UE side.

In this specification, a method for reporting preferred/non-preferred DL RS of a UE is proposed and subsequent base station/UE operations are proposed.

### < UE initiated BM-related background >

In the existing LTE/NR system, reporting of CSI/beam information of a UE is determined/controlled by a base station/network (except for the case of BFR). Such NW(network)-initiated/triggered report has a limitation that in an environment in which a wireless channel is (highly) likely to change rapidly, the UE has to be configured/instructed to frequently send CSI/beam information. In such an environment, the UL resource overhead for CSI/beam reporting and the related DL measurement RS overhead increase, and power consumption of the UE also increases due to frequent uplink transmission of the UE. In addition, as the number of UEs within the cell/TRP coverage increases, UL resources has to be allocated to each UE, and thus, the UL resource overhead increases. To overcome the limitations of these NW-initiated/triggered reports, the recently emerging methods are a UE-initiated/triggered reporting method or the event-based/triggered reporting method.

In the UE-initiated/triggered reporting method or the event-based/triggered reporting method, a UE determines whether/when to report. By performing the report only when necessary (e.g., only when a specific event occurs), UL resource overhead and UE power consumption may be reduced. With the above motivation, the standardization of the UE-initiated/triggered beam report is scheduled to proceed in NR Rel-19. In addition, in 6G communication systems, the UE-initiated/triggered or event-based transmission method may be more actively expanded and applied for efficient operation of uplink resources.

In the NR system, representative event-based or UE-initiated/triggered reporting information includes the SR (scheduling request) and BFR (beam failure recovery) reporting methods. SR reports whether PUSCH allocation is required for UL-SCH transmission, and BFR reports BF occurrence and new beam related information. This information is transferred/transmitted to the base station in an explicit or implicit manner (e.g., transfer a new beam index as PRACH resource selection information). The above-described SR/BFR related information is transferred at once or separately through one or two UL resources (e.g., BFRQ on PUCCH+beam information via MAC-CE on PUSCH).

In this specification, information (e.g., SR, BFRQ, new beam information, etc.) transferred to the network based on the UE event and/or through the UE-initiated/triggered transmission method as described above is described as 'event information' for convenience of description. Event information includes one or more information parts/blocks, and encoding/rate matching/RE mapping may be performed for each part/block unit. Each information part/unit may be transmitted in different transmission methods (e.g., BFRQ via UCI as L1 message, new beam information via MAC-CE as L2 message).

### < NES-related background >

Energy saving of base stations may contribute to building eco-friendly networks by reducing carbon emissions and to reducing operational expenditure (OPEX) of communication industry operators. Therefore, energy saving of base stations is considered important in wireless communication systems including 3GPP. In particular, as high transmission rates are required due to the introduction of 5G communication, base stations has to be equipped with more antennas and provide services through wider bandwidth and frequency bands. As a result, the energy cost of base stations has reached 20% of the total OPEX according to a recent study. Due to the increased interest in base station energy saving, a new study item called "study on network energy savings" and a new work item called "Network energy savings for NR" were approved in 3GPP NR release 18.

Specifically, the study item considers the following enhancement techniques to improve the energy saving capability of the base station in terms of transmission and reception:
- How to achieve more efficient operation dynamically and/or semi-statically and finer granularity adaptation of transmissions and/or receptions in one or more of network energy saving techniques in time, frequency, spatial, and power domains, with potential support/feedback from UE, and potential UE assistance information.

In addition, in the work item, the following enhancement techniques are considered:

**[Table 2]**

| |
|---|
| Specify SSB-less SCell operation for inter-band CA for FR1 and co-located cells, if found feasible by RAN4 study, in which a UE measures SSB transmitted on PCell or another SCell for an SCell's time/frequency synchronization (including downlink AGC), and L1/L3 measurements, including potential enhancement on SCell activation procedures if necessary [RAN4, RAN2] |
| Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3] |
| Note: No change for SSB transmission due to cell DTX/DRX. |
| Note: The impact to IDLE/INACTIVE UEs due to the enhancement should be avoided. |
| 3. Specify the following techniques in spatial and power domains |
| Specify necessary enhancements on CSI and beam management related procedures including measurement and report, and signaling to enable efficient adaptation of spatial elements (e.g. antenna ports, active transceiver chains) [RAN1, RAN2] |
| Specify necessary enhancements on CSI related procedures including measurement and report, and signaling to enable efficient adaptation of power offset values between PDSCH and CSI-RS [RAN1, RAN2] |
| Note: Above objectives are only for UE specific channels/signals |
| Note: Legacy UE CSI/CSI-RS capabilities applies when considering total number of CSI reports and requirements |
| 4. Specify mechanism(s) to prevent legacy UEs camping on cells adopting the Rel-18 NES techniques, if necessary [RAN2] |
| 5. Specify CHO procedure enhancement(s) in case source/target cell is in NES mode [RAN2] |
| 6. Specify inter-node beam activation and enhancements on restricting paging in a limited area [RAN3]. |
| 7. Specify the corresponding RRM/RF core requirements, if necessary, for the features [RAN4] |

The base station may perform at least one of the following operations 1) to 5) for NES purposes.
1) ON/OFF control for a certain duration in the time axis
2) Control of transmission/reception resources for UE-common or UE-specific signals/channels
3) Change of frequency axis resource amount
4) Control of transmit power
5) ON/OFF of antenna ports or TRPs in spatial domain

A state in which the aforementioned technology(s) (defined as NES_tech for convenience) is applied may be defined as an NES mode or NES state.

For example, the base station may inform the UE of which NES_tech(s) is applied for each NES_tech (or group thereof) (Approach 1).

For example, a base station may previously configure NES_tech (or a group)(s) thereof corresponding to a specific indicator (the indicator may be indicated by DCI or MAC CE, etc. or may be an indicator set by higher layer signaling) codepoint (Approach 2).

In the case of Approach 1, the state of a UE to which at least one NES_tech is applied may be defined as NES mode or NES state. Alternatively, it may be referred to as a different NES mode or different NES state depending on which NES_tech is applied.

In the case of Approach 2, the following NES mode or NES state may be defined. For example, when there is a 1-bit indicator, there is no corresponding NES_tech for '0', and one or more NES_techs may be linked to '1'. When '1' is indicated to a UE based on the indicator, the corresponding state may be defined as NES mode or NES state. For example, when there is a 2-bit indicator, there may be no corresponding NES_tech for '00', one or more NES_tech_As may be linked to '01', one or more NES_tech_Bs may be linked to '10', and one or more NES_tech_Cs may be linked to '11'. Based on the corresponding indicator, when a codepoint other than '00' is indicated to the UE, the corresponding state may be defined as NES mode or NES state. If '01' is indicated, it may be defined as NES state#1, if '10' is indicated, it may be defined as NES state#2, and if '11' is indicated, it may be defined as NES state#3. It may be distinguished whether it is an NES state or not or which NES state it is for each codepoint.

The base station may turn on or off some spatial elements for the purpose of NES or adjust a power value for the downlink signal/channel. In this specification, spatial elements may refer to antenna ports or active transceiver chains or panels or TRPs. In order to dynamically apply various NES technologies in the spatial and power domains, the base station may link CSI-RS resources (sets) with different antenna ports or link a plurality of power offsets for a single CSI report setting (e.g., CSI-ReportConfig). For example, the plurality of power offsets may be based on a powerControlOffset parameter, which is a power offset value between PDSCH and CSI-RS, a powerControlOffsetSS parameter, which is a power offset value between SSS and CSI-RS, etc.

### < AI/ML beam management-related background >

In the Rel-18 AI/ML study item, a study was conducted on performance analysis and potential specification impact through evaluation when NW and/or UE side AI/ML models operate in three use cases: CSI compression/prediction, beam management, and positioning. In particular, in the beam management use case, the sub-use cases were divided into BM-case1 and BM-case2, and performance analysis and potential specification impact were studied for spatial domain beam prediction and temporal beam prediction. The WID goals of AI/ML BM, BM-case1 and BM-case2 are summarized in Table 3 to Table 5 below.

### - WID goals of AI/ML BM

**[Table 3]**

| |
|---|
| Beam management - **DL Tx beam** prediction for both UE-sided model and NW-sided model, encompassing [RAN1/RAN2]: |
| Spatial-domain **DL Tx beam** prediction for Set A of beams based on measurement results of Set B of beams ("BM-Casel") |
| Temporal **DL Tx beam** prediction for Set A of beams based on the historic measurement results of Set B of beams ("BM-Case2") |
| Specify necessary signalling/mechanism(s) to facilitate LCM operations specific to the Beam Management use cases, if any |
| Enabling method(s) to ensure consistency between training and inference regarding NW-side additional conditions (if identified) for inference at UE |
| NOTE: Strive for common framework design to support both BM-Casel and BM-Case2 |

- BM-casel: Spatial domain downlink beam prediction for beam set A based on measurement results for beam set B.

**[Table 4]**

| |
|---|
| Basic assumption regarding Set B |
| Alt. i): Set A and Set B are different (Set B is NOT a subset of Set A). |
| Alt. ii): Set B is a subset of Set A. |
| Note: Set A is for DL beam prediction. The codebook construction of Set A and Set B may be clarified by companies. |
| Details on Set B (evaluation assumption perspective) |
| **Option 1:** Set B is fixed across training and inference |
| **Option 2:** Set B is variable (e.g., different beams (pairs) patterns in each time instance/report/measurement during training and/or inference) |
| **Opt 2A**: Set B is changed following a set of pre-configured patterns |
| **Opt 2B:** Set B is randomly changed among pre-configured patterns |
| **Opt 2C**: Set B is randomly changed among Set A beams (pairs) |
| **Opt 2D:** Set B is a subset of measured beams (pairs) Set C (including Set B = Set C), e.g. Top-K beams(pairs) of Set C |
| The number of beams(pairs) in Set B may be fixed or variable |
| Companies report the number of pre-configured patterns used in the evaluation for Option 2: Set B is variable if applicable (e.g. Opt A and Opt B) |
| AI/ML model input |
| Alt 1): Only L1-RSRP measurement based on Set B |
| Alt.2): L1-RSRP measurement based on Set B and assistance information |
| Alt. 3): CIR based on Set B |
| **Alt. 4): L1-RSRP measurement based on Set B and the corresponding DL Tx and/or Rx beam ID**. |

- BM-case2: Temporal downlink beam prediction for beam set A based on past measurement results of beam set B.

**[Table 5]**

| |
|---|
| Basic assumption regarding Set B |
| Alt. i): Set A and Set B are different (Set B is NOT a subset of Set A). |
| Alt. ii): Set B is a subset of Set A. (Set A and Set B are not the same). |
| Alt iii): Set A and Set B are the same. |
| AI/ML model input |
| measurement results of K (K≥1) latest measurement instances with the following alternatives: |
| Alt. 1): Only L1-RSRP measurement based on Set B |
| Alt 2): L1-RSRP measurement based on Set B and assistance information |
| **Alt. 3): L1-RSRP measurement based on Set B and the corresponding DL Tx and/or Rx beam ID**. |

In addition, an example of the operation for data collection of AI/ML model in Beam management use case is as shown in Table 6 below.

**[Table 6]**

| |
|---|
| *Data collection:* |
| At UE side for UE-side AI/ML model: |
| UE reporting to NW supported/preferred configurations of DL RS transmission. |
| Trigger/initiating data collection considering: |
| Option 1: data collection initiated/triggered by configuration from NW. |
| Option 2: request from UE for data collection. |
| Signalling/configuration/measurement/report for data collection, e.g., signalling aspects related to assistance information (if supported), Reference signals, content/type of the collected data, configuration related to Set A and/or Set B, information on association/mapping of Set A and Set B |
| Assistance information from Network to UE for UE data collection for categorizing the data for the purpose of differentiating characteristics of the data (if supported). The assistance information should preserve privacy/proprietary information. |
| At NW side for NW-side AI/ML model: |
| Mechanism related to the reporting. |
| Additional information for content of the reporting. |
| Reporting overhead reduction. |
| - Signalling/configuration/measurement/report for data collection, e.g., signalling aspects related to assistance information (if supported), Reference signals. |

In particular, in the case of UE-side AI/ML, an operation, such as requesting the base station to transmit the DL RS desired by the UE for data collection of the UE AI/ML model may be performed.

### < Rel-18 NES standardization background >

In Rel-18 NES, energy saving technology in the spatial domain and power domain on the base station side has been introduced. A sub-configuration introduced for CSI reporting in Rel-18 NES standardization is summarized as follows.

Sub-configuration(s) may be configured for a specific CSI report configuration. The sub-configuration may be configured based on at least one of i) to iii) below:
i) Only some resource(s) among the NZP CSI-RS resources in the CMR set of the CSI resource configuration connected to the corresponding CSI report configuration may be configured to be included in the sub-configuration.
ii) Only specific subset ports of multi-port CSI-RS resources (having the same number of ports) in the CMR set of the CSI resource configuration connected to the corresponding CSI report configuration may be configured to be included in the sub-configuration.
iii) A powerOffset parameter may be configured in the sub-configuration to include an additional offset value in the existing powerControlOffset, which sets the relative power offset of the CSI-RS and PDSCH.

The sub-configuration based on the i) and the sub-configuration based on the ii) cannot be configured together in one CSI report configuration. The sub-configuration(s) based on the combination of i) and iii) or the sub-configuration(s) based on the combination of ii) and iii) may be configured together in one CSI report configuration.

Through the i) and ii), the base station may configure a CSI-RS resource that simplifies port virtualization (through the configured sub-configuration) or configure a CSI-RS resource with a reduced number of ports (through the configured sub-configuration). Thereafter, the base station may determine whether to switch to a CSI report configuration to which energy saving of the spatial domain has been applied after receiving a CSI report related to the sub-configuration from the UE. The base station may transmit a CSI-RS using the sub-configuration in which a CSI-RS to which an additional power offset was applied based on the iii) is set. The base station may determine whether to apply energy saving in the power domain by receiving the CSI report related to the sub-configuration from the UE.

Meanwhile, when the sub-configuration is configured for the specific CSI report configuration as described above, in the case of a periodic CSI report, a CSI report has to be performed for all of the configured sub-configuration(s). In the case of SP/AP CSI report, the base station instructs the UE to perform the report among the configured sub-configurations based on MAC CE/DCI. More specifically, a trigger state for semi-persistent CSI reporting or aperiodic CSI reporting is indicated based on the CSI request field of the DCI. Based on the list (e.g., CSI-ReportSubConfigTriggerList) included in the trigger state, N sub-configurations may be indicated among L configured sub-configurations. N is an integer greater than or equal to 1. Since CSI reports for all configured sub-configurations has to be performed as described above (especially in the case of periodic CSI report), the following problems may occur.

The base station has to transmit the CSI-RS for multiple configurations (e.g., all configured sub-configurations or one or more indicated sub-configurations), and the UE will occupy a lot of UL resources due to increased CSI reporting overhead.

Hereinafter, the existing operation for the aforementioned sub-configuration is described.

A CSI-ReportConfig may contain a list of sub-configurations, provided by the higher layer parameter csi-ReportSubConfigToAddModList, in which each sub-configuration is identified by CSI-ReportSubConfigId and configured with nzp-CSI-RS-ResourceList which corresponds to a list of one or more CSI-RS resources or configured with portSubsetIndicator which corresponds to a CSI-RS antenna port subset, and/or configured with powerOffset which corresponds to a power offset for PDSCH relative to CSI-RS additional to powerControlOffset of the CSI-RS resource(s). A UE is not expected to be configured with a CSI-ReportConfig that contains a mix of sub-configuration(s) each configured with nzp-CSI-RS-ResourceList which corresponds to a list of one or more CSI-RS resources and some other sub-configuration(s) each configured with portSubsetIndicator which corresponds to CSI-RS antenna port subset.

If the UE is configured with a *CSI-ReportConfig* with the higher layer parameter *reportQuantity* set to 'cri-RI-CQI',
- if the UE is configured with higher layer parameter *non-PMI-PortIndication* contained in a *CSI-ReportConfig, r* ports are indicated in the order of layer ordering for rank *r* and each CSI-RS resource in the CSI resource setting is linked to the *CSI-ReportConfig* based on the order of the associated *NZP-CSI-RS-ResourceId* in the linked CSI resource setting for channel measurement given by higher layer parameter *resourcesForChannelMeasurement*. The configured higher layer parameter *non-PMI-PortIndication* contains a sequence ${p}_{0}^{\left(1\right)} , {p}_{0}^{\left(2\right)} , {p}_{1}^{\left(2\right)} , {p}_{0}^{\left(3\right)} , {p}_{1}^{\left(3\right)} , {p}_{2}^{\left(3\right)} , … , {p}_{0}^{\left(R\right)} , {p}_{1}^{\left(R\right)} , … , {p}_{R - 1}^{\left(R\right)}$ of port indices, in which ${p}_{0}^{\left(ν\right)} , … , {p}_{ν - 1}^{\left(ν\right)}$ are the CSI-RS port indices associated with rank ν and *R* ∈ {1,2,..., *P*} in which *P* ∈ {1,2,4,8} is the number of ports in the CSI-RS resource. The UE shall only report RI corresponding to the configured fields of *PortIndexFor8Ranks*. If the UE is configured with a *CSI-ReportConfig* that contains a list of sub-configurations with *portSubsetIndicator* configured in each sub-configuration, and the higher layer parameter *non-PMI-PortIndication* is separately provided for a sub-configuration, then *P* ∈ {1,2,4,8} corresponds to the number of bits with value 1 in the bitmap *portSubsetIndicator* for the sub-configuration and the CSI-RS port indices are derived by mapping antenna ports corresponding to all bits with value of 1 in *portSubsetIndicator* as consecutive antenna ports starting at CSI-RS port index 0 in increasing order of the bit position in *portSubsetIndicator*.
- if the UE is not configured with higher layer parameter *non-PMI-PortIndication,* the UE assumes, for each CSI-RS resource in the CSI resource setting linked to the *CSI-ReportConfig*, that the CSI-RS port indices ${p}_{0}^{\left(ν\right)} , … , {p}_{ν - 1}^{\left(ν\right)} = \left\{0,…,ν-1\right\}$ are associated with ranks *ν* = 1,2,..., *P* in which *P* ∈ {1,2,4,8} is the number of ports in the CSI-RS resource. If the UE is configured with a *CSI-ReportConfig* that contains a list of sub-configurations with *portSubsetIndicator* configured in each sub-configuration and the higher layer parameter *non-PMI-PortIndication* is not provided for a sub-configuration, then *P* ∈ {1,2,4,8} corresponds to the number of bits with value 1 in the bitmap *portSubsetIndicator* for the sub-configuration and the CSI-RS port indices are derived by mapping antenna ports corresponding to all bits with value of 1 in *portSubsetIndicator* as consecutive antenna ports starting at CSI-RS port index 0 in increasing order of the bit position in *portSubsetIndicator*.

When calculating the CQI for a rank, the UE shall use the ports indicated for that rank for the selected CSI-RS resource. The precoder for the indicated ports shall be assumed to be the identity matrix scaled by $\frac{1}{\sqrt{ν}}$).

Based on the three backgrounds (UE initiated BM, NES, AI/ML) described above, this specification proposes a method for reporting preferred/non-preferred DL RS of a UE and proposes a subsequent base station/UE operations.

### <Problems to be solved in this specification>

NES aspect: The possibility of standardizing the following operations is discussed in Rel-19 NES WI. Specifically, while the base station sends a light synch signal or a long-period SSB (e.g., an SSB defined/configured for power saving, a simplified synchronization signal (PSS only or PSS & SSS), or an SSB with a longer period than the existing SSB), if the UE sends a WUS signal, the base station may transmit a general SSB (e.g., an SSB with the same structure as the existing one (PSS, SSS, PBCH), an SSB with the same period as the existing one). There is an analysis that base station power saving is possible when the UE sends a full-SSB within a specific time interval by WUS. However, power saving seems difficult when multiple UEs transmit WUS consecutively, and it is inefficient because all SSBs are turned on by a specific UE. In addition, energy at the base station may be wasted by the sub-configuration introduced in Rel-18 NES. Specifically, the UE has to also perform CSI reports for all the configured sub-configurations (especially in the case of periodic CSI reports). On the base station side, CSI-RS for multiple configurations (such as all configured sub-configurations or one or more indicated sub-configurations) has to be transmitted, which may waste energy on the base station side. On the UE side, CSI reporting overhead may increase, which may occupy UL resources.

AI/ML aspect: Common understanding of Set A and/or Set B between the base station and the UE is required (to some extent). In addition to the DL RS/CMR already configured for UE measurement/reporting purposes (through parameters, such as reportConfig/CSI-resourceConfig), if the UE requests transmission of a specific UE-specific DL RS, a discussion is needed on what criteria/method to express the corresponding DL RS and how to request/report transmission for the corresponding DL RS.

In this specification, '/' may be interpreted as 'and', 'or', or 'and/or' depending on the context.

### Proposal 1

A UE may report SSB index(es) to a base station as a preferred DL RS or/and a non-preferred DL RS.

### Embodiment 1)

### [UE Operation]

As an example, a UE may report a non-preferred SSB index. The UE releases/deactivates reportConfig or/and CMR set (or the corresponding CMR) related to (UE-specific) CMR related to the reported non-preferred SSB index. Here, the (UE-specific) CMR related to the non-preferred SSB index may refer to a DL RS having the non-preferred SSB index as a QCL top source. For example, the (UE-specific) CMR (channel measurement resource) related to the SSB index (e.g., non-preferred SSB index, preferred SSB index) reported in this specification may be related to a DL RS having a QCL relationship (e.g., QCL relationship based on typeD) with an SSB (SS/PBCH block) based on the SSB index.

The release/deactivation may be performed after a certain time from the report of the non-preferred SSB index or after receiving a confirmation message from the base station. The UE no longer performs measurement & reporting related to the released/deactivated reportConfig or/and CMR set (or the corresponding CMR).

For example, the UE may report a non-preferred SSB index. The UE (e.g., a UE supporting Rel-18 NES) releases/deactivates a sub-configuration related to the (UE-specific) CMR related to the reported non-preferred SSB index. As a specific example, in the case of periodic CSI reporting, the sub-configuration may include a sub-configuration related to a CMR based on the non-preferred SSB index among the sub-configurations configured based on the CSI report configuration. As a specific example, in the case of semi-persistent/aperiodic CSI reporting, one or more sub-configurations may be indicated based on a trigger state among the configured sub-configurations. The sub-configuration may include a sub-configuration related to a CMR based on the non-preferred SSB index among the one or more indicated sub-configurations.

Or/and, the UE no longer performs measurement & reporting related to the sub-configuration. Here, the (UE-specific) CMR related to the non-preferred SSB index may refer to a DL RS having the non-preferred SSB index as a QCL top source. The release/deactivation may be performed after a certain period of time from the report of the non-preferred SSB index or after receiving a confirmation message from the base station.

More specifically, when the UE reports a non-preferred SSB index, a threshold for determining whether the UE does not prefer the SSB index may be configured by the base station. For example, the threshold may be related to SSB reception sensitivity.

For example, the UE may report a preferred SSB index (determined according to the specific reception sensitivity threshold). After a certain period of time from the report or after receiving the confirmation message from the base station, the UE releases/deactivates reportConfig, sub-configuration or/and CMR set (or the corresponding CMR) related to (UE-specific) CMRs related to the remaining SSB indices other than the reported preferred SSB index. The UE no longer performs measurement & reporting related to the remaining SSB index(es) other than the reported preferred SSB index. As a specific example, in case of periodic CSI reporting, the sub-configuration may include a sub-configuration related to CMR based on the remaining SSB index other than the preferred SSB index among the sub-configurations configured based on the CSI report configuration. As a specific example, in case of semi-persistent/aperiodic CSI reporting, one or more sub-configurations may be indicated based on a trigger state among the configured sub-configurations. The sub-configuration may include a sub-configuration related to CMR based on the remaining SSB index other than the preferred SSB index among the one or more indicated sub-configurations.

### [Base Station Operation]

For example, after receiving the non-preferred SSB index from the UE, the base station releases/deactivates (UE-specific) CMR related to the corresponding non-preferred SSB index from the corresponding UE after a certain period of time from the report or after transmitting a related confirm message or stops receiving reports on the (UE-specific) CMR related to the non-preferred SSB index. Here, the (UE-specific) CMR related to the non-preferred SSB index may refer to a DL RS having the non-preferred SSB index as a QCL top source.

For example, after receiving the non-preferred SSB index from the UE, the base station may perform at least one of the following operations after a certain period of time from the report (for a UE supporting Rel-18 NES) or after transmitting the related confirm message. The base station may release/deactivate the sub-configuration related to the corresponding non-preferred SSB index from the corresponding UE. The base station may stop receiving reports on the sub-configuration related to the corresponding non-preferred SSB index.

For example, after receiving the preferred SSB index from the UE, the base station may perform at least one of the following actions after a certain period of time or after transmitting the associated confirm message:

The base station may release/deactivate the (UE-specific) CMR or/and sub-configuration related to the remaining SSB indices other than the corresponding preferred SSB index from the corresponding UE. The base station may stop receiving reports on the (UE-specific) CMR or/and sub-configuration related to the remaining SSB indices other than the corresponding preferred SSB index.

For example, in the examples described above, after a certain period of time may be after N slots (N is a real number excluding negative numbers) or after X slots (X is a real number excluding negative numbers). For example, after receiving a confirmation message from the base station may refer to 3 ms after the UE receives A/N confirmation of the base station. Here, the number of slots corresponding to N or X may be configured by the base station or determined by a determined rule.

Effect of Embodiment 1) According to Embodiment 1, the following operations may be performed. The UE monitors reception sensitivity of a specific SSB index and (UE-specific) CMR related to the corresponding SSB. If the reception probability of the corresponding DL RSs decreases due to mobility of the UE or a change in geometry or if it is determined that the corresponding DL RSs do not steer the corresponding UE, the UE may report to the base station that it will stop measuring/tracking/reporting for the specific SSB and the (UE-specific) CMR related to the corresponding SSB. Through this operation, the UE may reduce unnecessary measurements and obtain a power saving effect. In addition, the base station may obtain a power saving effect in terms of NES by turning off the DL RS itself if the corresponding DL RSs are DL RSs configured UE-specifically.

### Embodiment 2)

The UE may report a preferred SSB index. The corresponding report may be related to i) a request/recommend to reduce transmit power of the preferred SSB index and ii) a request/recommend to reduce transmit power of (UE-specific) CMRs related to the preferred SSB index. Here, the CMR may refer to a DL RS having the preferred SSB index as a QCL top source. The present embodiment is for adjusting transmit power when the reception sensitivity is higher than necessary. For example, it may be assumed that the (UE-specific) CMR related to the preferred SSB index is determined to be an optimal reception beam of the corresponding UE and the corresponding CMR is received with a strong reception sensitivity higher than a specific reception sensitivity threshold. In this case, it is necessary to lower transmit power of the corresponding preferred SSB index and transmit power of the (UE-specific) CMRs related to the corresponding preferred SSB index.

Effect of Embodiment 2) According to Embodiment 2, the following operation may be performed. Unlike the operation of Embodiment 1, the preferred SSB index is reported. Based on the reception sensitivity of the corresponding preferred SSB index and the (UE-specific) CMRs related to the preferred SSB index being strong (more than necessary), the UE may request the base station to scale down transmit power. If the base station determines that power scale-down is necessary after receiving the UE report, it may reduce transmit power to obtain a power saving effect in terms of the NES.

### Embodiment 3)

### [UE operation]

The UE may report the preferred SSB index. (After a certain period of time from the report or after receiving a confirmation message from the base station) the UE may expect the base station to set a (UE-specific) CMR related to the reported preferred SSB index to a specific reportConfig or/and a specific CMR set for the purpose of data collection of the UE-side AI/ML model.

The specific reportConfig or/and a specific CMR set may be configured in advance by the base station to the UE for the purpose of configure a Set B beam set. Here, the CMR may refer to a DL RS having the preferred SSB index as a QCL top source.

In an embodiment, the preferred SSB index report of the UE may include i) one SSB index or ii) a plurality of SSB indices. For example, if the report includes one SSB index, the corresponding report may mean to configure B (B is a natural number) CMRs related to the reported SSB index for a specific reportConfig or/and a specific CMR set. For example, if the report includes a plurality of SSB indices, the report may mean to set one CMR related to each of the plurality of reported SSB indices for a specific reportConfig or/and a specific CMR set (e.g., the number of the plurality of reported SSB indices = the number of CMRs to be configured is set to be mapped 1:1).

According to an embodiment, the preferred SSB index report of the UE may include a plurality of SSB indices. The UE may additionally report coefficient information for each of the plurality of SSB indices. The UE may perform the report by expressing the DL RS required for data collection of the UE-side AI/ML model in the form of a linear combination of a plurality of SSB index beams.

The preferred SSB index reporting method of the UE to set the DL RS for data collection of the UE AI/ML model as described above may be utilized for a request for DL RS configuration related to the AI/ML model of the UE. Specifically, the preferred SSB index reporting method of the UE may be utilized to request DL RS configuration for comparison/reference measure/monitoring for performance monitoring of the AI/ML model of the UE. In this case, the base station may set the DL RS by the request for a specific reportConfig or/and a specific CMR set for performance monitoring of the AI/ML model on the UE side.

### [Base station operation]

For example, the base station may receive a preferred SSB index from the UE. (After a certain period of time from the reception of the preferred SSB index or after transmitting a related confirm message) the base station may set a (UE-specific) CMR related to the corresponding preferred SSB index from the corresponding UE to a specific reportConfig or/and a specific CMR set for a data collection purpose of the AI/ML model on the UE side. Here, the CMR may refer to a DL RS with the preferred SSB index as a QCL top source.

For example, the base station may receive a preferred SSB index from the UE. (After a certain period of time from the reception of the preferred SSB index or after transmitting a related confirm message) the base station may configure the DL RS in the form of a linear combination of a plurality of SSB index beams related to the corresponding preferred SSB index from the UE may be configured for the purpose of data collection of the UE-side AI/ML model for a specific reportConfig or/and a specific CMR set.

For example, in the examples described above, after the certain period of time may be after N slots (N is a real number excluding negative numbers) or after X slots (X is a real number excluding negative numbers). For example, after receiving a confirmation message from the base station may refer to 3 ms after the UE receives the A/N confirmation of the base station.

Effect of Embodiment 3) According to Embodiment 3, the following operations may be performed. The UE may request/report a DL RS for data collection purposes of the UE-side AI/ML model to the base station. At this time, the UE may express a desired beam by using the SSB beam as an anchor beam and request the base station to configure (Set B beam). Through this operation, the UE may appropriately perform data collection for training/retraining/inference/monitoring of AI/ML model for beam prediction of the UE in the operations of BM-case1 and BM-case2.

### Embodiment 4)

### [UE Operation]

The UE may receive a configuration for training/retraining/inference/monitoring of the UE side AI/ML model from the base station. The configuration may include information on the following i) and/or ii).
i) (cell/site/area/zone-common) a combination of a plurality of Set As or/and Set Bs common to the cell/site/area/zone
ii) (cell/site/area/zone-specific) a combination of a plurality of Sets As or/and Set Bs specific to the cell/site/area/zone

The UE may report a preferred SSB index (or/and a non-preferred SSB index). After a certain period of time from the report or after receiving a confirmation message from the base station, the UE may perform a beam prediction operation using the UE side AI/ML model.

Specifically, the UE may perform measurement and/or beam prediction operations based on i) a combination of Set A or/and Set B related to (UE-specific) CMR related to a preferred SSB index (or/and not related to a non-preferred SSB index) and/or ii) a combination of Set A or/and Set B related to (UE-specific) CMR not related to a non-preferred SSB index.

A specific reportConfig or/and a specific CMR set may be configured to the UE by the base station in advance for the purpose of configuration of the Set A/B beam set.

In an additional embodiment, the UE may report to the base station a preferred (or/and a non-preferred) combination of Set A or/and Set B of i and ii configured by the base station.

In addition, the base station may configure a plurality of combinations of Set A or/and Set B cell/site/area/zone-specific to specific UEs. Group-common DCI may be used as a signaling method indicating which combination among these combinations to use. The group-common DCI has the advantage of reducing signaling overhead and delay. Specifically, when the base station recognizes/confirms UEs located in a specific cell/site/area/zone, a specfiic Set A/B combination may be indicated to the UEs in a broadcast form based on the group-common DCI. This may reduce signaling overhead and delay.

### [Base station operation]

The base station may transmit a configuration for training/retraining/inference/monitoring of the UE side AI/ML model to the UE. The configuration may include information on the following i) and/or ii).
i) (cell/site/area/zone-common) combination of a plurality of Set A or/and Set B common to a cell/site/area/zone
ii) (cell/site/area/zone-specific) combination of a plurality of Set A or/and Set B specific to a cell/site/area/zone

The base station may receive a preferred SSB index (or/and a non-preferred SSB index) from the UE. After a certain period of time from the reception or after transmitting a related confirm message, the base station may recognize that the UE performs a beam prediction operation using the UE side AI/ML model.

Specifically, the base station may recognize that the UE performs a measurement and/or beam prediction operation based on i) a combination of Set A or/and Set B related to (UE-specific) CMR related to the preferred SSB index (or/and not related to the non-preferred SSB index) and/or ii) a combination of Set A or/and Set B related to (UE-specific) CMR not related to the non-preferred SSB index. For example, the base station may assume that the above-described measurement and/or beam prediction operations have been performed when performing operations related to the UE side AI/ML model.

For this process, (after reporting the preferred SSB index of the UE), the base station may configure/activate a DL RS corresponding to the Set A/B combination preferred by the UE to the UE. The base station may configure a specific reportConfig or/and a specific CMR set to the UE in advance for the purpose of configuration the Set A/B beam set.

In an additional embodiment, after receiving a report on the preferred (or/and non-preferred) combination among the Set A or/and Set B combinations configured as in the I and ii from the UE, the base station may recognize that the UE performs a beam prediction operation using the UE side AI/ML model for the preferred combination after a certain period of time or after transmitting a related confirm message.

Effect of Embodiment 4) This embodiment is a rule/regulation for mutual understanding of Set A or/and Set B used for beam prediction of UE AI/ML model between base station/UE and has an advantage that the base station and UE may have a common understanding through SSB index reporting. More progressively, if the base station and UE infer the same AI/ML model ID or AI/ML model functionality, the base station and UE may produce the same output data by utilizing the same Set A or/and Set B combination. Therefore, there may be an effect in terms of delay reduction in that the base station and UE may apply the output data to the subsequent uplink/downlink transmission without having to share the output data (e.g., predicted beam ID, etc.) produced by each AI/ML model.

### Embodiment 5)

### [UE operation]

The UE may report the preferred SSB index (or/and the non-preferred SSB index). (After a certain period of time from the report or after receiving a confirmation message from the base station) the UE may perform a positioning measurement report for a DL-PRS related to a preferred SSB index and/or a DL-PRS not related to a non-preferred SSB index. For example, a DL-PRS related to the preferred SSB index may refer to a DL-PRS having the preferred SSB index as a QCL top source. For example, a DL-PRS not related to the non-preferred SSB index may refer to a DL-PRS having an SSB index other than the non-preferred SSB index as a QCL top source.

More specifically, when the UE reports the preferred SSB index (or/and a non-preferred SSB index), a threshold for determining whether the UE prefers (or/and dislikes) the SSB index may be configured by the base station. For example, the threshold may be related to SSB reception sensitivity.

Effect of Embodiment 5) In the existing positioning-related UE measurement and report operation, the NW may configure DL PRS resources to the UE according to the recommendation of the Location Management Function (LMF). The UE may not measure all of the configured DL PRS resources. In other words, only some of the configured DL PRS resources may be measured by the UE. The UE is standardized to perform a measurement report (using PUSCH transmission) only for measurable PRS resources. In the case of Embodiment 5, there is an advantage that the NW may recognize in advance the DL PRS on which the UE will perform a measurement report in this background. The NW may predict a payload size including the contents of the positioning-related measurement report in advance, so there is an advantage that the base station may allocate uplink resources to the measurement report of the UE without wasting resources. In addition, according to the report of Embodiment 5, the LMF may recommend DL PRS to the NW based on the reported preferred SSB index. Accordingly, unnecessary PRS configuration/transmission is not performed by the NW, so a power saving effect may be obtained in terms of the NES.

For example, the preferred/non-preferred SSB index report of Proposal 1 may include one SSB index or a plurality of SSB indices.

For example, the preferred/non-preferred DL RS report of Proposal 1 may be transmitted based on UCI, such as PUCCH, PUSCH, etc. For example, the preferred/non-preferred DL RS report of Proposal 1 may be reported through MAC CE when transmitting PUSCH. For example, the UE report of Proposal 1 may be performed in an event-triggered manner. Specifically, the UE reporting of Proposal 1 may be performed based on specific resources (e.g., SR-PUCCH, SPS PUCCH/PUSCH, PRACH) configured by the base station when specific conditions related to the event are met.

The above embodiments may be operated by a combination of specific embodiments.

An example of the UE (or base station) operation based on at least one of the above-described embodiments (e.g., at least one of the embodiments of Proposal 1) is as follows.
1) The UE (base station) receives (transmits) a configuration related to preferred/non-preferred DL RS reporting.
   The configuration may include a signaling medium, payload, etc. for the preferred/non-preferred DL/RS reporting of the UE.
2) The UE (base station) receives (transmits) a message for scheduling transmission of the preferred/non-preferred DL RS reporting.
3) The UE (base station) transmits (receives) the preferred/non-preferred DL RS reporting based on the message.

Preferred/non-preferred DL/RS reporting may be performed by a UE-triggered operation (e.g., event-triggered method). In this case, the operation of 2) above may be omitted.

The uplink transmission may be based on at least one of the embodiments 1 to 5 of Proposal 1.

4) The UE (base station) performs the agreed/contracted operation based on at least one of the embodiments 1 to 5 of Proposal 1.

The UE/base station operation is only an example, and each operation (or step) is not necessarily essential, and the beam reporting operation of the UE according to the above-described embodiments may be omitted or added depending on the UE/base station implementation method.

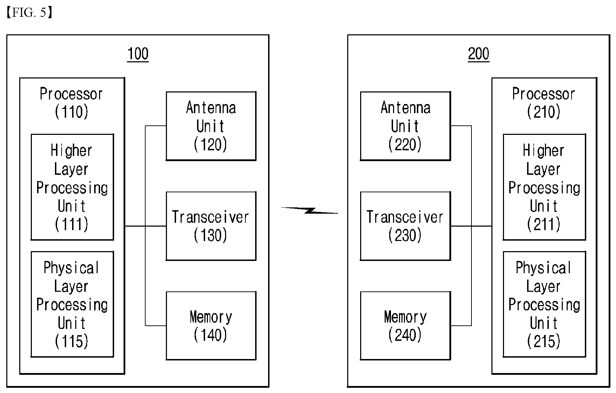

In terms of implementation, the operations of the base station/UE according to the above-described embodiments (e.g., operations based on at least one of the embodiments 1 to 5 of Proposal 1) may be processed by the device of FIG. 5 (e.g., the processor 110 or 210 of FIG. 5).

In addition, the operations of the base station/UE according to the above-described embodiments (e.g., operations based on at least one of the embodiments 1 to 5 of Proposal 1) may be stored in the memory (e.g., 140 or 240 of the FIG. 5) in the form of instructions/programs (e.g., instructions, executable codes) for driving at least one processor (e.g., 110 or 210 of the FIG. 5).

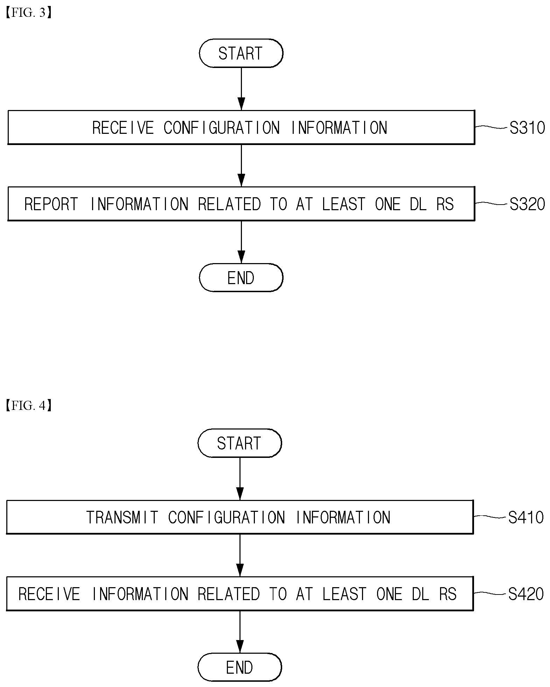

The embodiments described below are specifically described with reference to FIGS. 3 and 4 in terms of the operations of the UE and the base station. The methods described below are distinguished only for the convenience of description, and it is obvious that some components of one method may be substituted for some components of another method or may be applied in combination with each other.

FIG. 3 is a flowchart for describing a method according to an embodiment of the disclosure.

Referring to FIG. 3, the method according to an embodiment of the disclosure includes an operation of receiving configuration information (S310) and an operation of reporting information related to at least one DL RS (S320).

In S310, the UE receives configuration information from the base station.

For example, the configuration information may be received based on higher layer signaling (e.g., RRC signaling).

For example, the configuration information may include information related to a CSI report. A report quantity may be configured based on the configuration information. The report quantity may be related to information reported by the UE. For example, the report quantity may be configured to indicate at least one of i) a Reference Signal (RS) index (e.g., SSB Resource Indicator (SSBRI) and/or CSI-RS Resource Indicator (CRI), ii) a Reference Signal Received Power (RSRP), iii) a Channel Quality Indicator (CQI), and/or iv) a Precoding Matrix Indicator (PMI).

For example, the configuration information may include information based on at least one of Embodiments 1 to 5 of Proposal 1. The configuration information may include configurations related to measurement and/or reporting. The configurations may include configurations related to CSI. As a specific example, the configuration information (e.g., CSI-MeasConfig) may include information on one or more resource configurations (e.g., csi-ResourceConfigToAddModList) and/or information on one or more reporting configurations (e.g., csi-ReportConfigToAddModList).

Each CSI resource configuration (e.g., CSI-ResourceConfig) may include information on RS resources used for measurement. More specifically, each CSI resource configuration may include a list of references (e.g., NZP-CSI-RS-ResourceSetIds or CSI-SSB-ResourceSetIds) for RS resources used for measurement.

Each CSI report configuration (e.g., CSI-ReportConfig) may include a list of one or more sub-configurations (e.g., csi-ReportSubConfigToAddModList). The one or more sub-configurations may be based on the description of the sub-configuration described above.

In S320, the UE reports information related to at least one Downlink Reference Signal (DL RS) to the base station. The embodiments of Proposal 1 are described in detail below.

In an embodiment, one or more configurations among the configurations may be released or deactivated based on the at least one DL RS. The present embodiment may be based on Embodiment 1 of Proposal 1. The at least one DL RS may include i) a non-preferred DL RS and/or ii) a preferred DL RS. In the present embodiment, RS transmission/reception, UE measurement, and/or UE reporting based on the one or more configurations may not be performed. Accordingly, UE/base station power consumption may be reduced. The embodiments of Proposal 1 are described below by dividing them into non-preferred DL RS and preferred DL RS. However, this is for the convenience of description and does not mean that the application scope of the embodiments of Proposal 1 is limited to any one type of DL RS (preferred DL RS or non-preferred DL RS). The embodiments of Proposal 1 may also be applied when preferred DL RS and non-preferred DL RS are reported.

According to an embodiment, the at least one DL RS may include non-preferred DL RS(s).

For example, the one or more configurations may include configurations based on the non-preferred DL RS(s). The present embodiment may be based on Embodiment 1 of Proposal 1.

For examp*l*e, sets related to beam prediction may be determined based on DL RSs other than the non-preferred DL RS. The present embodiment may be based on Embodiment 4 of Proposal 1.

For example, positioning measurement reporting may be performed based on a Positioning Reference Signal (PRS) related to DL RSs other than the non-preferred DL RS. The present embodiment may be based on Embodiment 5 of Proposal 1.

According to an embodiment, the at least one DL RS may include preferred DL RS(s).

For example, the one or more configurations may include the remaining configurations except for the configuration based on the preferred DL RS among the configurations. The present embodiment may be based on Embodiment 1 of Proposal 1.

For example, the information may be related to a request for reducing transmit power of the preferred DL RS. The present embodiment may be based on Embodiment 2 of Proposal 1.

For example, information related to a model may be configured based on the preferred DL RS. The present embodiment may be based on Embodiment 3 of Proposal 1. The model may include i) a UE-sided model and/or ii) a networksided model. For a specific example, the information may include i) a plurality of DL RSs and ii) a coefficient for each DL RS among the plurality of DL RSs. The information related to the model may be related to a DL RS based on a linear combination of each DL RS among the plurality of DL RSs and the coefficients. As a specific example, based on the information related to the model, data collection for the model and/or performance monitoring of the model may be performed. The method may further include a step of receiving the information related to the model. Specifically, the UE receives the information related to the model from the base station.

As an example, sets related to beam prediction may be determined based on the preferred DL RS. The present embodiment may be based on Embodiment 4 of Proposal 1.

As an example, positioning measurement reporting may be performed based on a Positioning Reference Signal (PRS) related to the preferred DL RS. The present embodiment may be based on Embodiment 5 of Proposal 1.

According to an embodiment, the at least one DL RS may be based on at least one Synchronization Signal Block (SSB). The synchronization signal block may be interpreted/replaced with a synchronization signal/physical broadcast channel block (SS/PBCH block). For example, the information related to the at least one DL RS may include at least one SSB index.

According to an embodiment, the one or more configurations may include one or more sub-configurations (e.g., one or more sub-configurations) related to one reporting configuration. For example, one or more sub-configurations related to each of the one or more reporting configurations may be released/deactivated based on the at least one DL RS. For a specific example, the one or more configurations may include one or more sub-configurations related to one reporting configuration among the one or more reporting configurations based on the configuration information. For a specific example, the one or more configurations may include one or more sub-configurations related to each of the one or more reporting configurations based on the configuration information.

The present embodiment may be based on Embodiment 1 of Proposal 1. According to the existing behavior (e.g., periodic CSI reporting) defined for the sub-configuration, reporting is performed by the UE for all sub-configurations (e.g., sub-configurations contained in CSI-ReportConfig) based on the reporting configuration. According to the present embodiment, since measurement and/or reporting for one or more of the sub-configurations is not performed, the UE power consumption may be reduced.

According to an embodiment, among the sets configured for the model based on the information, the sets related to at least one DL RS may be indicated. The present embodiment may be based on Embodiment 4 of Proposal 1.

For example, the sets related to the at least one DL RS may be determined from among the sets indicated based on group common downlink control information (DCI) among the configured sets. As a specific example, the group common DCI may be based on a DCI format (e.g., DCI format 2_3, DCI format 2_6, DCI format 2_7, DCI format 2_9, or a new DCI format) related to one or more UEs.

For example, the configured sets may include i) sets common to the characteristics and/or ii) sets specific to each of the characteristics. The characteristics may be based on at least one of cell, site, area, and/or zone.

The operation based on the above-described S310 to S320 may be implemented by the device of FIG. 5. For example, referring to FIG. 5, the UE 200 may control one or more transceivers 230 and/or one or more memories 240 to perform operations based on S310 to S320.

Hereinafter, the embodiments described above are specifically described in terms of a base station operation.

S410 to S420 described below correspond to S310 to S320 described in FIG. 3. Considering the correspondence relationship, redundant descriptions are omitted. That is, the specific description of the base station operation described below may be replaced with the description/embodiment of FIG. 3 corresponding to the corresponding operations.

FIG. 4 is a flowchart illustrating a method according to another embodiment of the disclosure.

Referring to FIG. 4, the method according to another embodiment of the disclosure includes a step (S410) of transmitting configuration information and a step (S420) of receiving information related to at least one DL RS.

In S410, a base station transmits configuration information to a UE. The configuration information may include configurations related to measurement and/or reporting.

In S420, the base station receives information related to at least one downlink reference signal (DL RS) from the UE.

Based on the at least one DL RS, one or more of the configurations may be released or deactivated.

The operations based on the above-described S410 to S420 may be implemented by the device of FIG. 5. For example, referring to FIG. 5, the base station 100 may control one or more transceivers 130 and/or one or more memories 140 to perform the operations based on S410 to S420.

The operations/terms based on the above-described embodiments have been described based on the assumption of a 5G system. However, this is for the convenience of description and is not intended to limit the scope of application of the technical problem to be solved by this specification and the solution means to a specific system. That is, the technical tasks/technical issues/problems mentioned in this specification may equally exist in other systems (e.g., 6G systems). It is obvious that the embodiments of this specification may be extended and applied to solve the problems equally existing in the other systems. Accordingly, for the extended application of the embodiments of this specification to other systems, terms defined/described based on the 5G system may be replaced/changed with terms defined in the other systems (or generalized terms not specific to one system). For example, PRACH, PUSCH, PUCCH or SRS may be replaced/changed with uplink signals (or uplink channels). For example, SSB, CSI-RS, PDSCH, PDCCH may be replaced/changed with downlink signals (or downlink channels).

A device to which an embodiment of the disclosure is applicable (a device implementing the method/operation according to an embodiment of the disclosure) is described below with reference to FIG. 5.

FIG. 5 illustrates configuration of a first device and a second device according to an embodiment of the disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components, such as a buffer.

The processor 110 of the first device 100 may be configured to implement the operation of the BS in the BS-UE communication (or the operation of the first UE device in the inter-UE communication) in embodiments described in the disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components, such as a buffer.

The processor 210 of the second device 200 may be configured to implement the operation of the UE in the BS-UE communication (or the operation of the second UE device in the inter-UE communication) in embodiments described in the disclosure.

The descriptions for the BS and the UE in the BS-UE communication (or the first UE device and the second UE device in the inter-UE communication) in the examples of the disclosure may be equally applied to the operations of the first device 100 and the second device 200, and redundant descriptions are omitted.

The wireless communication technology implemented in the device according to the disclosure may further include narrowband Internet of Things (NB-IoT) for low-power communication in addition to LTE, NR, and 6G. For example, the NB-IoT technology may be an example of a low power wide area network (LPWAN) technology and may be implemented in standards, such as LTE Cat NB1 and/or LTE Cat NB2. The NB-IoT technology is not limited to the above-described names.

Additionally or alternatively, the wireless communication technology implemented in the device according to the disclosure may perform communication based on LTE-M technology. For example, the LTE-M technology may be an example of the LPWAN technology, and may be called by various names, such as enhanced machine type communication (eMTC). For example, the LTE-M technology may be implemented with at least one of various standards, such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the aforementioned names.

Additionally or alternatively, the wireless communication technology implemented in the device according to the disclosure may include at least one of ZigBee, Bluetooth, and low power wide area network (LPWAN) in consideration of low power communication, and is not limited to the aforementioned names. For example, the ZigBee technology may create personal area networks (PAN) related to small/low-power digital communication based on various standards, such as IEEE 802.15.4, and may be called by various names.

## Claims

1. A method comprising:
receiving configuration information from a base station, the configuration information including configurations related to measurement and/or reporting; and
reporting information related to at least one downlink reference signal (DL RS) to the base station,
wherein, based on the at least one DL RS, one or more configurations among the configurations are released or deactivated.

2. The method of claim 1, wherein the at least one DL RS includes a non-preferred DL RS.

3. The method of claim 2, wherein the one or more configurations include a configuration based on the non-preferred DL RS.

4. The method of claim 2, wherein sets related to beam prediction are determined based on a DL RS other than the non-preferred DL RS.

5. The method of claim 2, wherein positioning measurement reporting is performed based on a positioning reference signal (PRS) related to a DL RS other than the non-preferred DL RS.

6. The method of claim 1, wherein the at least one DL RS includes a preferred DL RS.

7. The method of claim 6, wherein the one or more configurations include remaining configurations excluding a configuration based on the preferred DL RS among the configurations.

8. The method of claim 6, wherein the information is related to a request for a reduction of transmit power of the preferred DL RS.

9. The method of claim 6, wherein information related to a model is configured based on the preferred DL RS.

10. The method of claim 9, wherein the information includes i) a plurality of DL RSs and ii) a coefficient for each DL RS among the plurality of DL RSs, and
wherein the information related to the model is related to a DL RS based on a linear combination of each DL RS among the plurality of DL RSs and the coefficient.

11. The method of claim 9, wherein, based on the information related to the model, data collection for the model and/or performance monitoring of the model are performed.

12. The method of claim 6, wherein, based on the preferred DL RS, sets related to beam prediction are determined.

13. The method of claim 6, wherein positioning measurement reporting is performed based on a PRS related to the preferred DL RS.

14. The method of claim 1, wherein the at least one DL RS is based on at least one synchronization signal block (SSB).

15. The method of claim 1, wherein the one or more configurations include one or more sub-configurations related to one reporting configuration.

16. The method of claim 1, wherein, based on the information, sets related to the at least one DL RS among sets configured for a model are indicated.

17. The method of claim 16, wherein the sets related to the at least one DL RS are determined from among sets indicated based on group common downlink control information (DCI) among the configured sets.

18. The method of claim 16, wherein the configured sets include i) sets common to characteristics and/or ii) sets specific to each of the characteristics.

19. A user equipment comprising:
one or more transceivers;
one or more processors; and
one or more memories connected to the one or more processors and storing instructions,
wherein the instructions allow the user equipment to perform all steps of a method according to any one of claims 1 to 18 based on being executed by the one or more processors.

20. A device comprising:
one or more memories; and
one or more processors operably connected to the one or more memories,
wherein the one or more memories store instructions that allow the device to perform all steps of a method according to any one of claims 1 to 18 based on being executed by the one or more processors.

21. One or more non-transitory computer readable mediums storing instructions,
wherein the instructions executable by one or more processors allow a user equipment to perform all steps of a method according to any one of claims 1 to 18.

22. A method comprising:
transmitting configuration information to a user equipment, the configuration information including configurations related to measurement and/or reporting; and
receiving information related to at least one downlink reference signal (DL RS) from the user equipment,
wherein, based on the at least one DL RS, one or more configurations among the configurations are released or deactivated.

23. A base station comprising:
one or more transceivers;
one or more processors; and
one or more memories connected to the one or more processors and storing instructions,
wherein the instructions allow the base station to perform all steps of a method according to claim 22 based on being executed by the one or more processors.
